Europäisches Patentamt

European Patent Office

Office européen des brevets

(11) Veröffentlichungsnummer: **0 345 717 B1**

(19)

# EUROPÄISCHE PATENTSCHRIFT

(12)

(45) Veröffentlichungstag der Patentschrift: **12.05.93**

(21) Anmeldenummer: **89110187.5**

(22) Anmeldetag: **06.06.89**

(51) Int. Cl.5: **A23K 1/16**, C12P 25/00, A23P 1/02

Die Akte enthält technische Angaben, die nach dem Eingang der Anmeldung eingereicht wurden und die nicht in dieser Patentschrift enthalten sind.

(54) **Verfahren zur Herstellung von auf mikrobiellem Wege hergestelltem Riboflavin in Form von Sprüh– oder Mikrogranulaten.**

(30) Priorität: **10.06.88 DE 3819745**

(43) Veröffentlichungstag der Anmeldung:
**13.12.89 Patentblatt 89/50**

(45) Bekanntmachung des Hinweises auf die Patenterteilung:
**12.05.93 Patentblatt 93/19**

(84) Benannte Vertragsstaaten:
**BE CH DE ES FR GB IT LI NL**

(56) Entgegenhaltungen:
**EP–A– 0 198 431**
**GB–A– 1 226 799**

**DERWENT FILE SUPPLIER, WPIL, 1981, AN=81–86919D [47], Derwent Publications Ltd, London, GB; & SU–A–807 009 (KIEV POLY) 23–02–1981**

**DERWENT FILE SUPPLIER WPI, 1979, AN=79–87290B [48], Derwent Publications Ltd, London, GB; & SU–A–652 422 (HEAT MASS EXCHANGE) 15–03–1979**

(73) Patentinhaber: **BASF Aktiengesellschaft**
**Carl–Bosch–Strasse 38**
**W–6700 Ludwigshafen(DE)**

(72) Erfinder: **Meyer, Joachim, Dr.**
**Gartenstrasse 6**
**W–6717 Hessheim(DE)**
Erfinder: **Buehler, Wolfgang, Dr.**
**Neckarstrasse 12**
**W–6832 Hockenheim(DE)**
Erfinder: **Grimmer, Johannes**
**Duererstrasse 12**
**W–6700 Ludwigshafen(DE)**
Erfinder: **Eipper, Gunter**
**Dhauner Strasse 28**
**W–6700 Ludwigshafen(DE)**
Erfinder: **Kiefer, Hans, Dr.**
**Im Sandgarten 5**
**W–6706 Wachenheim(DE)**
Erfinder: **Martin, Christoph, Dr.**
**Kolpingstrasse 6**
**W–6800 Mannheim 1(DE)**

CHEMIE−INGINEUR−TECHNIK, Band 59, Nr. 2, 1987, Seiten 112−117, Weinheim, DE; R. HERBENER: "Staubarme Pulver durch Sprühtrocknen − Erfahrungen mit neueren Techniken"

DERWENT FILE SUPPLIER WPIL, 1982, AN=82−32680E [16], Derwent Publications Ltd, London, GB; & SU−A−840 628 (KIEV POLY) 23−06−1981

Chem. Ing. Tech. 59(1987), Nr. 2, S. 113

Ullmanns Encyclopedia der techn. Chem., 4. Aufl., Bd. 23, 1983, S. 664

**Beschreibung**

Beschreibung

Die Erfindung betrifft ein Verfahren zur Herstellung von auf mikrobiellem Wege hergestelltem Riboflavin in Form von Sprüh − oder Mikrogranulaten als Futtermittelzusatz durch Entfernen von Wasser aus dem Austrag von mikrobiellen Fermentationen durch Sprühtrockenverfahren.

Die Herstellung von Riboflavin durch mikrobielle Fermentationsprozesse ist beispielsweise aus EP − A − 231 605, EP − A − 211 289 und DE − OS 34 20 310 bekannt. Das auf diesem Wege technisch hergestellte Riboflavin dient als Futtermittelzusatz. Das Endprodukt der fermentativen Riboflavinproduktion wird im allgemeinen durch Eindampfen der erhaltenen Kulturflüssigkeit zusammen mit der Biomasse in Form eines Riboflavinkonzentrates isoliert. Leider weisen die so erhaltenen Produkte z.T. schwerwiegende Nachteile auf. Sie haben beispielsweise ein schlechtes Fließverhalten, was in der Praxis dazu führen kann, daß durch Brückenbildung Lagersilos nicht oder nur ungenügend entleert werden und damit die Dosiergenauigkeit negativ beeinflußt wird. Außerdem besitzen sie nur ein niedriges Schüttgewicht. Dies führt in der Praxis zu hohen Verpackungs −, Lager − und Transportkosten. Insbesondere aber treten bei den bekannten Produk − ten infolge starker Staubentwicklung und Aufladungserscheinungen Handlingsschwierigkeiten beim Mischen zu Prämixen und Futtermitteln auf. Auch die Sprühtrocknung des Fermentationsaustrages mittels einer Zweistoffdüse ist bekannt, aber auch die hierdurch erhaltenen sprüngetrockneten Produkte befriedigen noch nicht vollständig alle anwendungstechnischen Voraussetzungen. Sie neigen z.B. beim Einmischen in Wasser bei der Herstellung von Flüssigfutter zur Klumpenbildung. Die gebildeten Klumpen lassen sich nur schwierig wieder zerteilen.

Es war daher die Aufgabe der Erfindung, ein Formulierungsverfahren für durch mikrobielle Fermentation hergestelltes Riboflavin zu entwickeln, bei dem freifließende, nicht staubende Sprühgranulate oder Mikro − granulate erhalten werden, die die beschriebenen Schwierigkeiten beim Herstellen von Prämixen oder Futtermitteln nicht aufweisen.

Es wurde nun überraschenderweise gefunden, daß man freifließende, nicht staubende und leicht zu handhabende, Riboflavin enthaltende Spühgranulate oder Mikrogranulate erhält, wenn man den Austrag aus mikrobiellen Fermentationen ohne Zusatz von Bindemitteln auf ganz bestimmte Weise sprühtrocknet.

Gegenstand der Erfindung ist dementsprechend ein Verfahren zur Herstellung von auf mikrobiellem Wege hergestelltem Riboflavin in Form von gut rieselfähigen, nichtstaubenden Sprüh − und Mikrogranulaten als Futtermittelzusatz durch Entfernen von Wasser aus dem Austrag aus mikrobiellen Fermentationen zur Herstellung von Riboflavin, das dadurch gekennzeichnet ist, daß man den Fermentationsaustrag

a) einer Sprühwirbelschichttrocknung

b) einer Einstoffdüsenzerstäubungstrocknung oder

c) einer Scheibenzerstäubungstrocknung

zuführt, ohne daß dem Fermentationsaustrag nennenswerte Mengen an Bindemitteln zugesetzt werden.

Überraschenderweise besitzen derart hergestellte Riboflavingranulate gegenüber den bisher bekannten und handelsüblichen Produkten z.T. erhebliche anwendungstechnische Vorteile.

Es war zwar schon aus EP 198 431 bekannt, daß man tablettierbare wasserlösliche Vitaminpulver unter Verwendung einer Wirbelschichttrocknung erhalten kann, jedoch ist bei diesem Verfahren der Zusatz eines Bindemittels in der ersten Trocknungsstufe und eines Gleitmittels in zweiter Stufe erforderlich.

Zur Herstellung der Sprüh − oder Mikro − Granulate kann die bei der fermentativen Herstellung von Riboflavin erhaltene Fernentationsbrühe als solche oder in angereicherter Form eingesetzt werden. Dabei ist als Fermentationsbrühe der Austrag einer Fermentation zu verstehen, die in bekannter Weise durchgeführt werden kann (vgl. EP − A 211 289, EP − A 231 605, DE − OS 34 20 310 oder Genevieve C. Barrerc in Biochemistry and Genetics of Vitamin Production. Nato Advanced Study Institute Series, Series A, 87 (1985), S. 141 bis 169, insbesondere S. 150 − 158). Das Medium für die Fermentation enthält: Kohlenstoff − quellen, wie Kohlenhydrate, organische Säuren, Alkohole oder Fette, Stickstoffquellen, wie proteinhaltige Mehle, Peptone, Aminosäuren, Harnstoff oder anorganische Stickstoffsalze. Auch Sulfate, Phosphate, Carbonate oder Nitrate von Magnesium, Kalium, Natrium, Calcium oder Mangan und sogar Vitamine können ebenfalls in das Fermentationsmedium eingesetzt werden.

Die Anreicherung der Fermentationsbrühe an Riboflavin kann durch Filtrieren oder Zentrifugieren und Dekantieren erfolgen (vgl. DE 29 20 592).

Im Gegensatz zu der bekannten Sprühtrocknung des Fermentationsaustrages, bei der dieser üblicher − weise mittels einer Zweistoffdüse in einen Trockenturm eingesprüht wird, wird bei der erfindungsgemäß angewendeten Sprühwirbelschichttrocknung die Suspension kontinuierlich oder diskontinuierlich in eine Wirbelschicht aus trockenem Reaktionsprodukt eingesprüht. Die Trockeneinrichtung ist mit geeigneten Vorrichtungen versehen, die es gestatten, eine bestimmte Partikelgrößenfraktion zu gewinnen und den Granulationsprozess aufrechtzuerhalten (vgl. K. Kröll, Trocknungstechnik, Band II "Trockner und Trock‐nungsverfahren", 2. Auflage, Springer‐Verlag, Berlin, 1978, Seiten 221 bis 223).

Zur Durchführung der erfindungsgemäßen Sprühwirbelschichttrocknung von Fermentationsaustrag geht man im allgemeinen so vor, daß man

a) Riboflavin in Form eines Trockenpulvers, eines Sprüh‐ oder Mikrogranulats in einem Wirbelschicht‐trockner in einem auf 20 bis 150 °C, vorzugsweise 50 bis 100 °C gehaltenen Wirbelbett vorlegt,

b) hierzu den erhaltenen Fermentationsaustrag, gegebenenfalls nach Anreichern an Riboflavin durch Dekantieren, nach Maßgabe der Trocknungsgeschwindigkeit in versprühter Form zugibt,

c) die Riboflavinpartikel nach geeigneter Verweilzeit aus dem Wirbelbett abzieht und durch eine geeignete Vorrichtung in Partikelfraktionen auftrennt,

d) die Partikelfraktion im Partikelgrößenbereich von etwa 100 bis 250 $\mu$m ausschleust und

e) die feinerteiligen Partikel und/oder die durch Vermahlen von größeren Partikeln erhaltenen feinteiligen Partikel in den Granulierungsprozeß zurückführt.

Die Sprühwirbelschichttrocknung kann diskontinuierlich und kontinuierlich durchgeführt werden. Mit besonderem Vorteil arbeitet man kontinuierlich.

Zur Durchführung des Verfahrens muß zunächst erst einmal aus Riboflavintrockenpulver, wie es dem Stand der Technik entspricht, ein solches Riboflavinprodukt hergestellt werden, mit dessen Hilfe man ein Wirbelbett erzeugen kann. Bei diskontinuierlicher Verfahrensführung kann man ein relativ feinteiliges Produkt im Wirbelbett vorlegen. Je nach der Verweilzeit der Partikel im Wirbelschichttrockner erhält man dann ein Trockenprodukt mit einem kleineren oder größeren Partikelgrößenbereich. Partikel im Größenbe‐reich von etwa 100 bis 250 $\mu$m weisen die gewünschten Handlingseigenschaften auf und werden daher als Wertprodukt gewonnen. Kleinere Partikel sowie durch geeignetes Vermahlen von größeren Partikeln erhaltenes Riboflavinprodukt wird als Wirbelbettmaterial für weitere Chargen verwendet.

Zur Durchführung des kontinuierlichen Verfahrens wird der Fermenteraustrag, vorzugsweise nach Anreichern an Riboflavin durch Dekantieren kontinuierlich in ein Wirbelbett, bestehend aus einem Riboflav‐introckenprodukt, eingesprüht. Die Geschwindigkeit des Einsprühens wird so eingestellt, daß die Wirbel‐schicht eine dem gewünschten Trocknungsgrad entsprechende Temperatur aufweist. Sie wird dement‐sprechend letztlich bestimmt durch die Differenz der Eintritts‐ und Austrittstemperatur des Wirbelgases.

Bei kontinuierlicher Verfahrensführung geht man nur beim erstmaligen Anfahren des Wirbelschicht‐trockners von feinteiligem Riboflavin aus. Danach erhält man ein Trockenprodukt von nahezu konstantem Partikelgrößenverhältnis. Hiervon wird kontinuierlich ein bestimmter Teil entnommen und in Partikelgrößen‐fraktionen aufgetrennt. Die Partikelfraktion im Partikelgrößenbereich von 100 bis 250 $\mu$m wird als Wertpro‐dukt ausgeschleust und die feinteiligen Partikel und/oder die durch Vermahlen von größeren Partikeln erhaltenen feinteiligen Partikel werden zur Aufrechterhaltung des Granulationsprozesses kontinuierlich in das Wirbelbett zurückgeführt. Jeweils etwa die als Wertprodukt entnommene Menge Riboflavin wird kontinuier‐lich in Form des zu trocknenden Fermentationsaustrages in das Wirbelbett eingesprüht.

Das zur Bildung des Wirbelbettes verwendete Wirbelgas hat im allgemeinen eine Eintrittstemperatur von 80 bis 250, vorzugsweise 140 bis 185 °C und eine Austrittstemperatur von 40 bis 140, vorzugsweise 60 bis 85 °C, wodurch sich Temperaturen von etwa 20 bis 150, vorzugsweise 50 bis 100 °C im Wirbelbett ergeben.

Bei der Durchführung der erfindungsgemäßen Wirbelschichttrocknung ergeben sich im allgemeinen folgende Partikelgrößenfraktionen:

1. etwa 6 bis 30 % im Partikelgrößenbereich bis 100 $\mu$m

2. etwa 25 bis 85 % im Partikelgrößenbereich von 100 bis 250 $\mu$m

3. etwa 1 bis 70 % im Partikelgrößenbereich von 250 bis 400 $\mu$m.

Zur Durchführung der erfindungsgemäßen Einstoffdüsenzerstäubungstrocknung von Fermentations‐austrag verwendet man im allgemeinen eine Einstoffhohlkegeldüse, wie sie beispielsweise von der Firma Delawan unter der Bezeichnung "SDX‐Standard" angeboten wird. Aber auch Hohlkegeldüsen der Firmen Lechler, Schlick und Lurgi sowie Hohlkegeldüsen gemäß EP‐A2 0 121 877 können eingesetzt werden. Die Zerstäubungsenergie wird hierbei durch den Druck einer Pumpe erzeugt, die die zu trocknende Flüssigkeit der Einstoffhohlkegeldüse zuleitet. Der für die Zerstäubung erforderliche Druck kann bis zu 80 bar absolut betragen, vorzugsweise werden jedoch nur Drucke von 15 bis 25 bar absolut angewendet. Der in der zu trocknenden Flüssigkeit enthaltende Feststoffanteil kann bis zu 45 Gew.%, vorzugsweise 15 bis 30 Gew.% betragen.

Das zu trocknende Gut wird mittels der beschriebenen Einstoffhohlkegeldüse in einen beheizten Trockenturm eingetragen, hier getrocknet und am unteren Ende des Turms ausgetragen. Die Trockentur‐meingangstemperatur des Trocknungsgases beträgt im allgemeinen etwa 100 bis 200, vorzugsweise 130 bis 170°C, die Verweilzeit beträgt im allgemeinen etwa 20 bis 40 Sekunden. Um eine nicht staubende Vitamin−B$_2$−Mikrogranulatfraktion zu erhalten, muß die im Trockenturm anfallende Trockenware einer geeigneten Trennvorrichtung zugeführt werden. Als Trennvorrichtung kann der Trockenturm−Austragskonus ausgebildet werden, wie dies beispielsweise in der Patentschrift DE 33 44 509 beschrieben ist. In dieser Trennvorrichtung wird das nicht staubende Mikrogranulat als Nutzfraktion abgeschieden, während die kleineren Partikel (< 20 µm) den Trockenturm mit dem Trocknungsgas verlassen. Dieses Feingut wird in nachgeordneten Abscheidern (Zyklone, Filter) vom Gasstrom abgetrennt und kann dem zu trocknenden Fermentationsaustrag zugemischt werden (Rückführung). Der Anteil der staubenden Feinfraktion ist abhängig vom Feststoffgehalt des der Hohlkegeldüse zugeleiteten Fermentationsaustrages sowie vom Düsenvordruck. Der Feinanteil kann ca. 5 bis 40 % betragen. Bei einem Feststoffgehalt des Austrags von ca. 25 bis 30 % und einem Düsenvordruck von ca. 15 bar beträgt der rückzuführende Feinanteil nur ca. 5 bis 10 %.

Das auf diese Weise erhaltene Produkt weist einen Partikelgrößenbereich von 30 bis 200 µm auf.

Auch das so erhaltene Mikrogranulat zeichnet sich durch hervorragende Handlingseigenschaften aus.

Auch durch Scheibenzerstäubungstrocknung des Fermentationsaustrages kann man auch ohne Zusatz von nennenswerten Mengen an Bindemitteln ein Mikrogranulat herstellen, welches nach der Abtrennung des Feingutanteils (< 20 µm) wie sie oben beschrieben wurde, sehr gute Handlingseigenschaften aufweist.

Die nach dem erfindungsgemäßen Verfahren hergestellten Riboflavin−Sprüh−oder Mikrogranulate besitzen überraschenderweise gegenüber den bislang bekannten und handelsüblichen Trockenpulvern erhebliche anwendungstechnische Vorteile.

Beispiel 1

In einem Wirbelschichttrockner wurden 0,9 bis 1 kg/Stunde einer wäßrigen Suspension (durch Dekantieren angereicherter Fermenteraustrag), bestehend aus 78 Teilen Wasser und 22 Teilen Feststoff (enthaltend gemäß HPLC−Untersuchung 73,1 % Riboflavin) von 20°C kontinuierlich mittels einer Zweistoffdüse in ein Wirbelbett, bestehend aus 96 %igem Riboflavin mit einer mittleren Korngröße von 0,12 mm eingesprüht. Das Wirbelgas hatte eine Gaseintrittstemperatur von 140 bis 150°C. Die Einspritzmenge wurde so bemessen, daß sich eine Wirbelschichttemperatur von 75 bis 80°C ergab. Innerhalb von etwa 25 Stunden wurde die Wirbelschichtvorlage 5mal gewechselt und das gebildete Produkt entfernt. Danach war das ursprünglich vorgelegte Riboflavin praktisch aus dem Trocknungsprozeß ausgeschleust und das in der Wirbelschicht enthaltene Produkt hatte eine Zusammensetzung von 73,1 % Riboflavin und 26,9 % Biomasse sowie die unten beschriebene Partikelgrößenverteilung. Anschließend wurde kontinuierlich ein Teil der Wirbelbettvorlage abgezogen und durch Siebeinrichtungen in 3 Partikelfraktionen getrennt. Man erhielt dabei

1) 38 % eines Produktes mit einem Partikelgrößenbereich < 100 µm

2) 54,5 % des Wertproduktes mit einem Partikelgrößenbereich von 100 bis 250 µm

3) 7,5 % eines Produktes mit einem Partikelgrößenbereich > 250 µm.

Die Grobfraktion 3) wurde gemahlen bis zu einem Partikelgrößenbereich von < 250 µm und dann zusammen mit der feinteiligen Fraktion 1) kontinuierlich wieder in die Wirbelschicht zurückgeführt.

Die pro Stunde (h) erhaltene Menge an Wertprodukt betrug 0,2 bis 0,27 kg.

Beispiel 2

In einem Wirbelschichttrockner wurden 0,75 bis 0,8 kg/h einer wäßrigen Suspension (durch Dekantieren angereicherter Fermenteraustrag), bestehend aus etwa 80,3 % Wasser und 19,7 % Feststoff (enthaltend gemäß HPLC−Untersuchung ca. 63,9 % Riboflavin) von 20°C kontinuierlich mittels einer Zweistoffdüse in ein Wirbelbett aus Riboflavin etwa gleicher Zusammensetzung eingesprüht. Das Wirbelgas hatte eine Gaseintrittstemperatur von 140 bis 150°C. Die Einspritzmenge wurde so bemessen, daß sich eine Wirbelschichttemperatur von etwa 75°C einstellte.

Ein Teil der Wirbelbettvorlage wurde kontinuierlich abgezogen und durch Siebeinrichtungen in 3 Partikelfraktionen getrennt.

Hierbei erhielt man

1) 45,6 % eines Produktes mit einem Partikelgrößenbereich < 100 µm

2) 50,2 % des Wertproduktes mit einem Partikelgrößenbereich von 100 bis 250 µm

3) 4,2 % eines Produktes mit einem Partikelgrößenbereich > 250 µm.

Die Grobfraktion 3) wurde gemahlen bis zu einem Partikelgrößenbereich von < 250 µm und dann zusammen mit der feinteiligen Fraktion 1) kontinuierlich wieder in die Wirbelschicht zurückgeführt.

Es wurden etwa 0,15 kg an Riboflavinsprühgranulat pro h erhalten.

In der folgenden Tabelle werden die anwendungstechnisch wesentlichen Eigenschaften des gemäß den Beispielen 1 und 2 erhaltenen Riboflavinproduktes den von bisher handelsüblichen Produkten gegenübergestellt.

Anwendungstechnische Eigenschaften

| Riboflavin [hergestellt gemäß Beispiel ] | Fließverhalten Fließwinkel [Grad] | Durchfluß [mm] | Staubtest [o/15/30 sec] | mittlere Korngröße [mm] | Partikel [Mio/g] | Schüttgewicht [g/cm³] | Farbe | Geruch |
|---|---|---|---|---|---|---|---|---|
| Beispiel 1 | 30 | 4 | 5/3/1 | 0,21 | 0,21 | 0,55 | gelbbraun | schwach nach Hefe |
| Beispiel 2 | 32 | 4 | 5/2/1 | 0,14 | 0,70 | 0,49 | gelbbraun | schwach nach Hefe |
| Riboflavin-feed* 62 %ig (BASF) | 55 | 24 | 60/22/15 | 0,04 | 29,9 | 0,32 | gelb | intensiv nach Fermenterrückstand |
| Riboflavin-feed* 80 % (Hoffmann-La Roche) | 31 | 5 | 24/14/8 | 0,06 | 8,8 | 0,41 | orangebraun | schwach dumpf |

* hergestellt durch Sprühtrocknen mittels einer Zweistoffdüse

6

Beispiel 3

In einem Wirbelschichttrockner wurden etwa 100 kg/h eines durch Dekantieren angereicherten Fermenteraustrages, bestehend aus 76 % Wasser und 24 % Feststoff (enthaltend 70,8 % Riboflavin) von 20°C kontinuierlich mittels einer Zweistoffdüse in eine Wirbelschicht aus Riboflavin etwa gleicher Zusammensetzung eingesprüht. Die Wirbelgaseintrittstemperatur betrug 170°C. Die Einspritzmenge wurde so bemessen, daß sich eine Wirbelbettemperatur von 71 bis 72°C einstellte.

Ein Teil der Wirbelbettvorlage wurde kontinuierlich abgezogen und durch Siebeinrichtungen kontinuierlich in 3 Partikelfraktionen getrennt. Das erhaltene Trockenprodukt wies folgende Partikelgrößenverteilung auf:

1) 5 % eines Produktes mit einem Partikelgrößenbereich < 100 $\mu$m

2) 28 % des Wertproduktes mit einem Partikelgrößenbereich von 100 bis 250 $\mu$m

3) 67 % eines Produktes mit einem Partikelgrößenbereich > 250 $\mu$m.

Die Grobfraktion 3) wurde gemahlen bis zu einem Partikelgrößenbereich von < 250 $\mu$m und dann zusammen mit der feinteiligen Fraktion 1) kontinuierlich wieder in die Wirbelschicht zurückgeführt.

Etwa 24,5 kg/h an dem gewünschten Riboflavinsprühgranulat (Partikelgrößenbereich 100 bis 250 $\mu$m) wurden erhalten.

Beispiel 4

In einem Wirbelschichttrockner wurden 0,95 kg/h eines nicht aufkonzentrierten Fermenteraustrages, bestehend aus 86 % Wasser und 14 % Feststoff in ein Riboflavinwirbelbett eingesprüht. Das Wirbelgas hatte eine Gaseintrittstemperatur von 160 bis 170°C. Die Einspritzmenge wurde so bemessen, daß sich eine Wirbelschichttemperatur von 78 bis 80°C einstellte.

Analog Beispiel 1 wurden 0,1 bis 0,12 kg/h an Riboflavinsprühgranulat mit dem gewünschten Partikelgrößenbereich von 100 bis 250 $\mu$m erhalten.

**Patentansprüche**

1. Verfahren zur Herstellung von auf mikrobiellem Wege hergestelltem Riboflavin in Form von gut rieselfähigen, nichtstaubenden Sprüh- oder Mikrogranulaten als Futtermittelzusatz durch Entfernen von Wasser aus dem Austrag mikrobieller Fermentationen zur Herstellung von Riboflavin, dadurch gekennzeichnet, daß man den Fermentationsaustrag
   a) einer Sprühwirbelschichttrocknung
   b) einer Einstoffdüsenzerstäubungstrocknung oder
   c) einer Scheibenzerstäubungstrocknung
   zuführt, ohne daß dem Fermentationsaustrag nennenswerte Mengen an Bindemitteln zugesetzt werden.

2. Verfahren gemäß Anspruch 1, dadurch gekennzeichnet, daß man zur Durchführung der Sprühwirbelschichttrocknung
   a) Riboflavin in Form eines Riboflavintrockenpulvers, eines Sprüh- oder Mikrogranulates in einem Wirbelschichttrockner in einem auf 20 bis 150°C gehaltenen Wirbelbett vorlegt,
   b) hierzu den erhaltenen Fermentationsaustrag, gegebenenfalls nach Anreichern an Riboflavin durch Dekantieren, nach Maßgabe der Trocknungsgeschwindigkeit in versprühter Form zugibt,
   c) die Riboflavinpartikel nach geeigneter Verweilzeit aus dem Wirbelbett abzieht und durch eine geeignete Vorrichtung in Partikelfraktionen auftrennt,
   d) die Partikelfraktion im Partikelgrößenbereich von etwa 100 bis 250 $\mu$m ausschleust und
   e) die feinerteiligen Partikel und/oder die durch Vermahlen von größeren Partikeln erhaltenen feinteiligen Partikel in den Granulierungsprozeß zurückführt.

3. Verfahren gemäß Anspruch 2, dadurch gekennzeichnet, daß man zur kontinuierlichen Durchführung der Sprühwirbelschichttrocknung ein auf 50 bis 100°C gehaltenes Wirbelbett, bestehend aus Riboflavin-Sprüh- oder -Mikrogranulaten verwendet, kontinuierlich einen Teil des erhaltenen getrockneten Produktes aus der Wirbelschichtvorlage entnimmt und in Partikelfraktionen auftrennt, die Partikelfraktion im Partikelgrößenbereich von etwa 100 bis 250 $\mu$m als Wertprodukt ausschleust und die feinerteiligen Partikel und/oder die durch Vermahlen von größeren Partikeln erhaltenen feinerteiligen Partikel in das Wirbelbett zurückführt um den Granulationsprozeß aufrecht zu erhalten.

7

**4.** Verfahren gemäß Anspruch 3, dadurch gekennzeichnet, daß man ein auf 60 bis 80˚C gehaltenes Wirbelbett, bestehend aus Riboflavin − Sprüh − oder − Mikrogranulaten, verwendet.

**5.** Verfahren gemäß Anspruch 1 zur Herstellung von Mikrogranulaten, dadurch gekennzeichnet, daß man zur Durchführung der Einstoffdüsenzerstäubungstrocknung den Fermentationsaustrag unter einem Druck von 5 bis 80 bar (absolut) durch eine Einstoffhohlkegeldüse in einen geeigneten Trockenturm einsprüht.

**Claims**

**1.** A process for the preparation of riboflavin, produced by a microbial method, in the form of free − flowing, non − dusting, spray − dried granules or microgranules as a feed additive by removing water from the mixture discharged from microbial fermentation for the preparation of riboflavin, wherein the mixture discharged from the fermentation is subjected to
a) a fluidized − bed spray − drying process
b) a one − material spray − drying process or
c) a disk spray − drying process
without significant amounts of binders being added to the mixture discharged from the fermentation.

**2.** A process as claimed in claim 1, wherein, to carry out the fluidized − bed spray drying procedure,
a) riboflavin in the form of a dry powder, spray − dried granules or microgranules is initially taken in a fluidised − bed drier in a fluidized bed kept at 20 − 150˚C,
b) the fermentation mixture obtained is added in atomized form, if necessary after concentration of riboflavin by decantation, at the rate at which drying takes place,
c) the riboflavin particles are removed from the fluidized bed after a suitable residence time and separated into particle fractions by a suitable apparatus,
d) the particle fraction having a particle size of from about 100 to 250 $\mu$m is separated off and
e) the finer particles and/or the fine particles obtained by milling of larger particles are recycled to the granulation process.

**3.** A process as claimed in claim 2, wherein, to carry out the fluidized − bed spray drying by continuous procedure, a fluidized bed kept at from 50 to 100˚C and consisting of riboflavin spray − dried granules or microgranules is used, a part of the resulting dried product is removed continuously from the initially taken fluidized bed and is separated into particle fractions, the particle fraction having a particle size of about 100 − 250 $\mu$m is separated off as the desired product and the fine particles and/or the fine particles obtained by milling of larger particles are recycled to the fluidized bed in order to maintain the granulation process.

**4.** A process as claimed in claim 3, wherein a fluidized bed kept at from 60 to 80˚C and consisting of riboflavin spray − dried granules or microgranules is used.

**5.** A process as claimed in claim 1 for the preparation of microgranules, wherein, to carry out the one − material spray − drying, the discharged fermentation mixture is sprayed, under from 5 to 80 bar (absolute), by means of a one − material hollow − cone nozzle into a suitable drying tower.

**Revendications**

**1.** Procédé de fabrication de riboflavine, préparée par voie microbienne, sous forme de granulé séché par pulvérisation ou de microgranulé coulant bien et ne produisant pas de poussière, destiné à servir d'additif dans des aliments pour animaux, par élimination d'eau dans le produit issu de fermentations microbiennes de préparation de riboflavine, caractérisé en ce qu'on envoie le produit de fermentation dans un appareil
a) de séchage par pulvérisation en lit fluidisé,
b) de séchage par pulvérisation à buse à un seul constituant ou
c) de séchage par pulvérisation à disques,
sans qu'il soit ajouté, au produit de fermentation, des quantités appréciables de liants.

**2.** Procédé selon la revendication 1, caractérisé en ce que, pour l'exécution du séchage par pulvérisation en lit fluidisé,

a) on introduit au préalable de la riboflavine, sous forme d'une poudre sèche de riboflavine, d'un granulé séché par pulvérisation ou d'un microgranulé, dans un séchoir en lit fluidisé, dans un lit fluidisé maintenu à une température de 20 à 150°C,

b) on y ajoute sous forme pulvérisée, en fonction de la vitesse de séchage, le produit de fermentation obtenu, éventuellement après enrichissement en riboflavine par décantation,

c) on extrait du lit fluidisé les particules de riboflavine après un temps de séjour approprié, et on les sépare en fractions de particules au moyen d'un dispositif approprié,

d) on évacue la fraction de particules dans la plage granulométrique d'environ 100 à 250 $\mu$m,

e) on renvoie dans le traitement de granulation les particules plus fines et/ou les particules fines obtenues par broyage de plus grosses particules.

**3.** Procédé selon la revendication 2, caractérisé en ce que, pour l'exécution en continu du séchage par pulvérisation en lit fluidisé, on utilise un lit fluidisé maintenu à une température de 50 à 100°C, composé d'un granulé séché par pulvérisation ou d'un microgranulé de riboflavine, on prélève en continu, dans la charge préalable du lit fluidisé, une partie du produit séché obtenu et on la sépare en fractions de particules, on évacue la fraction de particules dans la gamme granulométrique d'environ 100 à 250 $\mu$m en tant que produit de valeur, et on renvoie dans le lit fluidisé, pour maintenir le traitement de granulation, les particules plus fines et/ou les particules fines obtenues par broyage de plus grosses particules.

**4.** Procédé selon la revendication 3, caractérisé en ce qu'on utilise un lit fluidisé maintenu à une température de 60 à 80°C, composé d'un granulé séché par pulvérisation ou d'un microgranulé de riboflavine.

**5.** Procédé selon la revendication 1 pour la fabrication de microgranulés, caractérisé en ce que, pour l'exécution du séchage par pulvérisation à buse à un seul constituant, on injecte le produit de fermentation dans une tour de séchage appropriée, à travers une buse en cône creux à un seul constituant, sous une pression de 5 à 80 bar (absolue).